# EUROPEAN PATENT APPLICATION

(11) **EP 4 756 899 A1**
(43) Date of publication of application: **10.06.2026**
(21) Application number: 24849547.5
(22) Date of filing: 30.07.2024
(51) Int. Cl.: H01M 4/134, H01M 4/62, H01M 10/0585, C08L 27/18, C08L 33/20, C08K 3/04, C08J 3/00, H01M 10/0562

(54) **COMPOSITE BINDER PARTICLES HAVING CORE-SHELL STRUCTURE, METHOD FOR PRODUCING SAME, ELECTRODE INCLUDING PARTICLES, AND SECONDARY BATTERY INCLUDING ELECTRODE**

(30) Priority: 01.08.2023 KR 20230100298; 28.11.2023 KR 20230168319
(71) Applicant: CNP Solutions Co., Ltd., Seoul 02841 (KR)
(72) Inventor: KIM, Jong Eun, Seoul 03620 (KR); SUH, Kwang Suck, Yongin-si Gyeonggi-do 16806 (KR); PARK, Jong Ho, Gongju-si Chungcheongnam-do 32594 (KR); SUH, Min Won, Daejeon 34050 (KR)
(74) Representative: Beck & Rössig European Patent Attorneys
(86) International application number: PCT/KR2024/011079
(87) International publication number: WO 2025/028980

(57) **Abstract**

The present invention relates to a technology associated with secondary batteries, and more particularly, to a novel core-shell structured composite binder particle, a method for preparing the same, an electrode comprising the particle, and a secondary battery including the electrode. Specifically, when a fluorine-based resin is employed as a binder in an electrode material composition for a dry process in order to facilitate fibrillation, the fluorine-based resin exhibits very low compatibility with other materials, which leads to various technical problems. The present invention is directed to solving such problems by providing a composite binder particle having a new core-shell structure.

## Description

### Technical Field

The present invention relates to technology associated with secondary batteries, and more particularly, to novel core-shell structured composite binder particles capable of imparting properties such as electrode surface formability, adhesion, and ionic conductivity in a dry-process electrode material composition, a method for manufacturing the binder particles, an electrode comprising the binder particles, and a secondary battery comprising the electrode.

### Background Art

Secondary batteries, typified by lithium-ion batteries, operate as electrical energy storage devices through repeated charge and discharge processes driven by the migration of metal ions between a positive electrode and a negative electrode. For example, in a lithium-ion battery, the positive electrode active material is a lithium-containing compound. During charging, lithium ions are extracted from the positive electrode active material and inserted into the negative electrode material (lithiation). During discharging, the lithium ions previously inserted in the negative electrode are released (delithiation) and return to the positive electrode active material. Through the repetition of these processes, the battery functions as an electrical energy storage device.

In conventional methods, an electrode, which is a key component of such secondary batteries, is manufactured by mixing an active material and a conductive additive with a binder in a solvent to prepare a slurry, and then coating the slurry onto a metal current collector to a predetermined thickness. In this context, a method of preparing an electrode material composition by dispersing and mixing the respective components in a solvent is referred to as a wet process. In contrast, a method of preparing an electrode material composition by directly mixing the respective components without a solvent, and fabricating an electrode therefrom, is referred to as a dry process.

Since the dry process does not require a step of evaporating a solvent, it offers various advantages, and accordingly, extensive efforts have been made to implement and commercialize dry-process electrode fabrication. In the dry process, an electrode material composition is prepared by mixing the respective components without a solvent, and therefore, the role of a binder that binds the active material and the conductive additives together is particularly important.

The binder predominantly used in dry-process electrode fabrication is a fluoropolymer known as PTFE (polytetrafluoroethylene). In order to manufacture an electrode by a dry process, an active material, a binder, and a conductive additive are first dry-mixed to prepare an electrode material composition. Thereafter, the prepared electrode material composition is formed into a sheet (or a free-standing film), and the sheet may then be attached to a metal current collector. During this process, the binder is mixed together with the active material and the conductive additive, and is known to undergo so-called fibrillation during the sheet-forming step, thereby binding the respective components together.

However, PTFE exhibits very low compatibility with other materials, and thus, when it is used as a binder, it is difficult to maintain strong adhesion with an active material and conductive additives. Although the respective components may appear to be bound together by direct contact under high compression, it has been reported that their interfacial bonding state tends to change under environmental conditions such as temperature and humidity, particularly under repeated temperature fluctuations and the accompanying micro-scale shrinkage and expansion during charge-discharge cycles. When such changes occur, the binding state between the active material and the conductive additive by the binder becomes weakened, which in turn leads to deterioration of the electrochemical properties of the battery.

In order to address these problems, attempts have been made to use a fluorine-based binder in combination with other conventional binders. This approach employs a binder blend in which PTFE (polytetrafluoroethylene), which is advantageous for fibrillation during the fabrication of an electrode material sheet, is mixed with another organic compound so as to maintain the binding state between an active material and conductive additives.

However, this approach also has a significant drawback in that uniform mixing is difficult to achieve. Specifically, PTFE and the other binder must be mixed in a particulate state, and in order to obtain a favorable mixing condition, the two binder materials must have very similar properties, including particle shape, particle size, and electrostatic characteristics. In addition, when dry mixing is performed in a state where PTFE is mixed with another binder, fibrillation of PTFE tends to occur preferentially during the mixing process, resulting in deformation of the PTFE particles. In such a case, it becomes extremely difficult to achieve uniform mixing between the PTFE and the other binder particles, thereby giving rise to various problems.

Accordingly, there is a need to develop binder-related technologies and electrode material composition technologies that can provide a uniformly mixed electrode material composition through a dry process even when a fluorine-based polymer such as PTFE is used as a binder without the above-described problems, as well as technologies for manufacturing electrodes from such electrode material compositions and further manufacturing secondary batteries, including all-solid-state batteries, using the same.

### Disclosure

### Technical Problem

Therefore, in the present invention, core-shell structured composite binder particles in which a fluorine-based resin and other organic compound form one composite binder particle are developed and used as a mixed binder during a dry process for forming an electrode material layer.

Accordingly, one objective of the present invention lies in providing a novel type of core-shell structured composite binder particle and a method for preparing the same, in which a fluorine-based resin-having very low compatibility with other materials and thus being difficult to uniformly mix and liable to deteriorate adhesion with other materials-is used as a core, and a shell formed of another organic compound surrounds the fluorine-based resin core. With this structure, even in the case of a mixed binder in which the fluorine-based resin and the other organic compound are contained at predetermined proportions, uniform mixing can be achieved through a dry process.

Another object of the present invention is to provide an electrode having an electrode material layer with excellent binding strength, which is obtained by dry mixing only the core-shell structured composite binder particles as a binder during a dry process for forming the electrode material layer, thereby achieving a uniformly mixed composite binder state. In addition, the present invention provides a secondary battery, including an all-solid-state battery, comprising the electrode and exhibiting more uniform electrochemical properties.

Objectives of the present invention are not limited to the objectives mentioned hereinabove, and other objectives not mentioned will be clearly understood by those skilled in the art from the following description.

### Technical Solution

To achieve the aforementioned objectives of the present invention, the present invention first provides a core-shell structured composite binder particle comprising: a core formed of a first binder that is a fluorine-based resin; and a shell formed of a second binder that entirely surrounds the surface of the core.

In a preferred embodiment, the fluorine-based resin includes at least one selected from the group consisting of a fluorine-containing homopolymer, a fluorine-containing copolymer, and combinations thereof.

In a preferred embodiment, the first binder includes polytetrafluoroethylene (PTFE), and the second binder includes at least one organic compound that is used as a binder for an electrode of a secondary battery.

In a preferred embodiment, the second binder includes at least one selected from: a ternary copolymer (terpolymer/three-component copolymer) or a binary copolymer (copolymer/two-component copolymer) including two or more functional groups selected from acrylonitrile groups, glycol groups, and carboxyl groups; or polyvinylidene fluoride or a copolymer containing vinylidene fluoride.

In a preferred embodiment, the terpolymer or copolymer is an acrylonitrile-based copolymer.

In a preferred embodiment, the terpolymer is an acrylonitrile-ethylene glycol-maleic acid copolymer, and the copolymer is an acrylonitrile-acrylic acid copolymer.

In a preferred embodiment, in the terpolymer or copolymer, any one component is included in an amount of 5 mol% to 95 mol%.

In a preferred embodiment, the second binder includes at least one lithium-added terpolymer or copolymer that contains two or more functional groups selected from an acrylonitrile group, a glycol group, and a carboxyl group, and in which lithium is pre-introduced.

In a preferred embodiment, the second binder further includes, in addition to the terpolymer or copolymer, other binder compound for a secondary battery electrode.

In a preferred embodiment, the other binder compound for a secondary battery electrode is at least one selected from the group consisting of polyvinylidene fluoride (PVDF), carboxymethyl cellulose(CMC), styrene-butadiene rubber(SBR), polyacrylic acid (PAA), lithium-added polyacrylic acid, maleic acid-based binders, lithium-added maleic acid-based binders, and combinations thereof.

In a preferred embodiment, the copolymer and the other binder compound are included in a weight ratio of 90:10 to 10:90.

In a preferred embodiment, the second binder further includes a nanocarbon material.

In a preferred embodiment, the nanocarbon material includes at least one selected from the group consisting of carbon nanotubes(single-walled, double-walled, multi-walled, or branched), carbon nanoribbons, carbon nanoplates, graphene, and conductive carbon black.

In a preferred embodiment, the nanocarbon material is included in an amount of 2 to 100 parts by weight per 100 parts by weight of the remaining binder compounds, excluding the nanocarbon material.

In a preferred embodiment, the diameter of the core formed of the first binder is 0.05 to 5.0 µm.

In a preferred embodiment, the first binder and the second binder are included in a weight ratio of 90:10 to 10:90.

In addition, the present invention provides a method for preparing core-shell structured composite binder particles, comprising: dispersing a first binder, which is a fluorine-based resin, in water to prepare a first-binder dispersion; dissolving a second binder, which is a polymer, in a solvent to prepare a second-binder solution; adding the second-binder solution to the first-binder dispersion while stirring; and performing a post-treatment step including filtering, washing, and drying a resultant product obtained after completion of the stirring.

In a preferred embodiment, the contents of the first binder dispersed in the first binder dispersion and the second binder dissolved in the second binder solution are adjusted to provide a weight ratio of 90-10:10-90.

In a preferred embodiment, the stirring step is performed at a speed of 200 to 5,000 rpm, under a temperature condition of 20 to 70°C, for a period of 20 minutes to 5 hours.

In addition, the present invention provides an electrode comprising an electrode material layer that includes any one of the above-described core-shell structured composite binder particles or the core-shell structured composite binder particles prepared by any one of the above-described methods.

In a preferred embodiment, the electrode material layer further includes a nanocarbon material.

In a preferred embodiment, the electrode includes at least one of: a configuration in which the nanocarbon material is at least one selected from the group consisting of carbon nanotubes(single-walled, double-walled, multi-walled, or branched), carbon nanoribbons, carbon nanoplates, graphene, and conductive carbon black; and a configuration in which the nanocarbon material is included in an amount of 2 to 100 parts by weight per 100 parts by weight of the remaining binder composition, excluding the nanocarbon material, in the electrode material layer.

The present invention also provides a secondary battery comprising the above-described electrode.

In a preferred embodiment, the active material of the electrode is at least one selected from the group consisting of alkali metal elements, alkaline earth metal elements, manganese, nickel, cobalt, aluminum, iron, phosphorus, tin, titanium, graphite, silicon, silicon oxide, sulfur, and combinations thereof.

In a preferred embodiment, the secondary battery is an all-solid-state battery comprising a sulfide-based solid electrolyte.

### Advantageous Effects

According to the above-described core-shell structured composite binder particles of the present invention and the method for preparing the same, a fluorine-based resin, which exhibits very low compatibility with other materials and thus is difficult to uniformly mix and tends to deteriorate adhesion with other materials, is used as a core, and a shell formed of another organic compound surrounds the fluorine-based resin core. As a result, the fluorine-based resin and the other organic compound constitute a single composite binder particle, thereby suppressing a phenomenon in which only the fluorine-based resin is preferentially fibrillated during a mixing process and uniform mixing is not achieved. That is, during the mixing process, while the fluorine-based resin serving as the core component (first binder) undergoes fibrillation, the shell component, that is, the second binder, also participates in the fibrillation process. Accordingly, even in the case of a mixed binder in which the fluorine-based resin and the other organic compound are contained at predetermined proportions, uniform mixing can be achieved through a dry process.

In addition, the electrode of the present invention has an electrode material layer with excellent binding strength, which is formed by dry mixing only the core-shell structured composite binder particles as a mixed binder during a dry process for forming the electrode material layer, thereby achieving a uniformly mixed binder state. Furthermore, the secondary battery of the present invention, which includes the above-described electrode, can exhibit more uniform electrochemical properties. In particular, when the core-shell structured composite binder particles in which the second binder is a low-polarity, hydrophobic organic binder are used, the secondary battery is especially advantageous for application in a sulfide-based all-solid-state battery.

Effects of the present invention are not limited to the effects mentioned hereinabove, and other effects not mentioned will be clearly understood by those skilled in the art from the following description.

### Description of Drawings

FIG. 1 is a schematic cross-sectional view of core-shell structured composite binder particles according to various embodiments of the present invention.
FIG. 2 is a photograph of a first binder (PTFE) dispersion used in a method for preparing core-shell structured composite binder particles according to various embodiments (Example 1) of the present invention.
FIG. 3 is a photograph of core-shell structured composite binder particles prepared according to various embodiments (Example 1) of the present invention.
FIG. 4 is a photograph of core-shell structured composite binder particles prepared according to various embodiments (Example 2) of the present invention.
FIG. 5 is a graph showing charge-discharge cycle test resultsof Coin Cell 1 prepared in Example 18 so as to include Positive Electrode 1 comprising the core-shell structured composite binder particles obtained according to various embodiments of the present invention.
FIG. 6 is a graph showing charge-discharge cycle test resultsof Coin Cell 2prepared according to various embodiments (Example 19) of the present invention.
FIG. 7 is a graph showing charge-discharge cycle test resultsof Coin Cell 6prepared according to various embodiments (Example 23) of the present invention.
FIG. 8 is a graph showing charge-discharge cycle test resultsof Coin Cell 7prepared according to various embodiments (Example 24) of the present invention.
FIG. 9 is a graph showing charge-discharge cycle test resultsof Coin Cell 8prepared according to various embodiments (Example 25) of the present invention.
FIG. 10 is a graph showing charge-discharge cycle test resultsof Test Cell 1 prepared according to various embodiments (Example 26) of the present invention.

### Mode for Invention

The terminology used herein is for the purpose of describing particular embodiments only and is not intended to limit the present invention. As used herein, singular forms include plural forms as well, unless the context clearly indicates otherwise. In the present application, the terms "comprise," "include," or "have" are intended to specify the presence of stated features, numbers, steps, operations, elements, components, parts, or combinations thereof, but do not preclude the presence or addition of one or more other features, numbers, steps, operations, elements, components, parts, or combinations thereof.

The terms "first," "second," and the like may be used to describe various elements, but such elements should not be limited by these terms. These terms are only used to distinguish one element from another. For example, a first element may be termed a second element without departing from the scope of the present invention, and similarly, a second element may be termed a first element.

Unless otherwise defined, all terms used herein, including technical and scientific terms, have the same meaning as commonly understood by a person having ordinary skill in the art to which the present invention pertains. Terms such as those defined in commonly used dictionaries should be interpreted as having meanings consistent with their meanings in the context of the relevant art and should not be interpreted in an idealized or overly formal sense unless expressly so defined herein.

In interpreting elements, it is understood that a range of error is included even in the absence of an explicit description thereof. In particular, when terms of degree such as "about" and "substantially" are used, they are to be interpreted as encompassing inherent manufacturing and material tolerances, and thus may be construed as having meanings at or near the stated values.

With respect to temporal relationships, when terms such as "after," "subsequent to," "following," and "before" are used to describe a temporal sequence, such terms are intended to include nonconsecutive relationships unless the terms "immediately" or "directly" are expressly used.

Hereinafter, the technical configuration of the present invention will be described in detail with reference to the accompanying drawings and preferred embodiments.

However, the present invention is not limited to the embodiments described herein and may be embodied in various other forms. Throughout the specification, like reference numerals refer to like elements. In describing the present invention, detailed descriptions of related known configurations or functions may be omitted when they are deemed to unnecessarily obscure the subject matter of the present invention.

The technical features of the present invention reside in providing a novel type of core-shell structured composite binder particle, a method for preparing the same, an electrode including the core-shell structured composite binder particles as a binder in a dry process for forming an electrode material layer, and a secondary battery comprising the electrode. In the present invention, a fluorine-based resin, which exhibits very low compatibility with other materials and is therefore difficult to uniformly mix and tends to deteriorate adhesion with other materials, is used as a core, and a shell formed of another organic compound surrounds the fluorine-based resin core. With this structure, even in the case of a mixed binder in which the fluorine-based resin and the other organic compound are contained at predetermined proportions, uniform mixing can be achieved in a dry process.

That is, in a dry process for forming an electrode material layer, a fluorine-based polymer such as PTFE (polytetrafluoroethylene)is commonly used as a binder. PTFE is mixed together with an active material and a conductive additive and undergoes so-called fibrillation during the sheet-forming process to bind the respective components. However, since PTFE exhibits low compatibility and adhesion with other materials, although the components may appear to be bound together under high compression, the binding state tends to change in response to variations in environmental conditions such as temperature and humidity. As a result, the electrochemical properties of the battery may deteriorate.

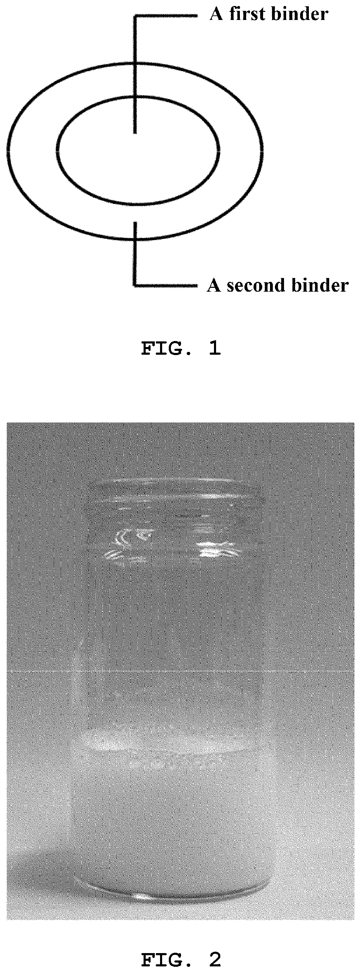

Accordingly, the core-shell structured composite binder particles of the present invention comprise: a core formed of a first binder that is a fluorine-based resin; and a shell formed of a second binder that entirely surrounds the surface of the core. As illustrated in FIG. 1, the composite binder particles have a structure in which fluorine-based resin particles constitute the core, and an organic compound forms a shell covering the outer surface thereof. Through extensive experiments on blending fluorine-based resin particles with acrylonitrile-based copolymers, the inventors have confirmed that, when the two materials are mixed under predetermined conditions, a single, integrated particle structure can be obtained.

The fluorine-based resin serving as the first binder that forms the core is not particularly limited as long as it contains a fluorine component, and may include at least one selected from the group consisting of fluorine-based homopolymers, fluorine-based copolymers, and combinations thereof. As a non-limiting example, fluorine-based resins such as polytetrafluoroethylene (PTFE), fluoroethylene propylene (FEP), and polyvinylidene fluoride (PVDF)may be used. In particular, the first binder may include polytetrafluoroethylene (PTFE).

The diameter of the core formed of the first binder, that is, the fluorine-based resin particles, may be in the range of 0.05 to 5.0 µm. When the particle size of the fluorine-based resin is less than 0.05 µm, it becomes difficult to prepare fluorine-based resin particles or to form a stable fluorine-based resin dispersion, which is disadvantageous. On the other hand, when the particle size exceeds 5.0 µm, the particles are excessively large, making them unsuitable for use as a binder in a dry process, which is also disadvantageous.

The second binder forming the shell may be any compound capable of surrounding the surface of the fluorine-based resin particles to form a core-shell structure. The second binder may be a polymer that can be used as a binder for an electrode of a secondary battery, and may be a polymer that is soluble in an organic solvent or an aqueous solvent. The second binder may include one or more polymers. As one embodiment, the compound included in the second binder may be in the form of a homopolymer, such as polyvinylidene fluoride (PVDF), which is widely used as a binder for positive electrodes, or may be in the form of a copolymer having various functional groups imparting multiple functions. In particular, a copolymer having various functional groups such that the compound itself exhibits properties such as adhesion, flexibility, and ionic conductivity may be suitable as a binder for a dry process. Moreover, when two or more of these binders are used in combination, the respective properties of the binders can complement each other, thereby providing enhanced overall performance, which is advantageous.

As one embodiment of other binder compounds for secondary battery electrodes that may be used as the second binder, one or more binders may include polyolefins, polyalkylenes, polyethers, polyvinyl ethers, styrene-butadiene rubber (SBR), polysiloxane and copolymers thereof, branched polyethers, polyacrylic acid (PAA), lithium-added polyacrylic acid, polyvinyl carbonate, copolymers thereof, and/or mixtures thereof. In addition, one or more binders may further include guar, alginic acid, poly(ethylene-alt-maleic anhydride), poly(methyl vinyl ether-alt-maleic anhydride), polyacrylonitrile, acrylonitrile-acrylic acid-maleic anhydride copolymers, acrylic acid-acrylonitrile copolymers, imidazole-based polymers and copolymers, poly(methyl methacrylate) (PMMA), and poly(vinyl chloride) (PVC). In some embodiments, the polyolefin may include polyethylene, polypropylene, polyvinylidene fluoride (PVDF), polytetrafluoroethylene (PTFE), copolymers thereof, and/or mixtures thereof. For example, the binder may include polyvinylidene chloride, poly(phenylene oxide) (PPO), polyethylene-block-poly(ethylene glycol), poly(ethylene oxide) (PEO), poly(dimethylsiloxane) (PDMS), copolymers thereof, and/or mixtures thereof. In certain embodiments, a fibrillatable binder is PTFE. The binder may include cellulose or a cellulose derivative. Examples of cellulose derivatives include cellulose esters, such as cellulose acetate; cellulose ethers, such as methyl cellulose, ethyl cellulose, hydroxypropyl cellulose (HPC), hydroxypropyl methylcellulose (HPMC), and hydroxyethyl cellulose (HEC); cellulose nitrate; cellulose chitosan, such as carboxymethyl cellulose chitosan; and carboxyalkyl celluloses, such as carboxymethyl cellulose (CMC), carboxyethyl cellulose, carboxypropyl cellulose, and carboxyisopropyl cellulose. In additional embodiments, the cellulose or cellulose derivative may include a cellulose salt. In another embodiment, the cation of the cellulose salt may be selected from sodium, ammonium, calcium, and lithium. For example, the cellulose or cellulose derivative may include sodium celluloseor a sodium cellulose derivativeselected from sodium cellulose esters, sodium cellulose ethers, sodium cellulose nitrate, and sodium carboxyalkyl celluloses. In particular, CMC may include sodium carboxymethyl cellulose. In some embodiments, one or more binders include CMC, PVDF, and/or PTFE.

In another embodiment, the second binder may include one or more terpolymer or copolymer systems comprising at least two selected from acrylonitrile groups, glycol groups, and carboxyl groups, wherein the terpolymer or copolymer may be an acrylonitrile-based copolymer. Here, the terpolymermay be an acrylonitrile-ethylene glycol-maleic acid copolymer, and the copolymermay be an acrylonitrile-acrylic acid copolymer. In particular, in the terpolymer or copolymer, each constituent component may be present in an amount of 1 mol% to 95 mol%, because when the content of any one component is less than 1 mol% or exceeds 95 mol%, the resulting polymer is more similar to a homopolymer than to a true copolymer, which is disadvantageous in achieving the object of the present invention. Meanwhile, the properties of these copolymers may be adjusted depending on the compositional ratio of the respective components. For example, the glycol-based compounds may include ethylene glycol and propylene glycol, and the carboxyl group-containing compoundsmay include monomers such as acrylic acid, maleic acid, maleic anhydride, and acrylates. In addition, any component capable of being copolymerized with acrylonitrile to enhance flexibility, adhesion, and ionic conductivity may be used without particular limitation.

Further, the second binder may include a lithium-added copolymer rendered water-soluble through hydrogenation and lithium addition reactions. The lithium-added copolymer may be a terpolymer or copolymerin which lithium is pre-introduced and which includes at least two selected from acrylonitrile groups, glycol groups, and carboxyl groups.

If necessary, the second binder may further include, in addition to the terpolymer or copolymer, other binder compounds for secondary battery electrodes as described above. As one embodiment, the additional binder compound for secondary battery electrodes may be selected from the group consisting of polyvinylidene fluoride (PVDF), carboxymethyl cellulose (CMC), styrene-butadiene rubber (SBR), polyacrylic acid (PAA), and combinations thereof. Here, the additional binder compound for secondary battery electrodes may be selected depending on the electrode system. For a positive electrode system, it is advantageous to use a compound having an oxidation potential of 5 V or higher, such as PVDF. For a negative electrode system, binders commonly used in negative electrode compositions, such as CMC, SBR, or PAA, may be employed in combination. In addition, for a sulfide-based all-solid-state battery, it is advantageous to use a low-polarity hydrophobic compoundas the binder. This is because a highly polar binder is more likely to absorb moisture, and the absorbed moisture may react with sulfur to generate hydrogen sulfide gas (H₂S). In this case, when the shell layer is formed of a low-polarity second binder around the core layer of the first binder, moisture penetration into the binder is effectively suppressed, thereby enabling the preparation of a composite binder with low moisture absorbency, which is particularly advantageous. At this time, the mixing ratio of the copolymer included in the second binder and the additional binder compound may be 90:10 to 10:90 by weight. If the ratio falls outside this range, the resulting binder exhibits properties substantially equivalent to those of a single-component material.

In some embodiments, the second binder may further include a nanocarbon material. In this case, the nanocarbon material in a desired amount may be pre-dispersed in the second binder solutionand then introduced into the first binder dispersion, or alternatively, the nanocarbon material may be added together when the second binder solution is introduced into the first binder dispersion, thereby preparing the core-shell structured composite binder particles. By employing this technique, the nanocarbon material is pre-incorporated into the composite binder, so that the amount of nanocarbon material to be additionally introduced during the preparation of the electrode material layer composition can be reduced, which contributes to the uniform dispersion of the nanocarbon material. The nanocarbon material usable in the present invention may include carbon nanotubes(single-walled, double-walled, multi-walled, or branched), carbon nanoribbons, carbon nanoplates, graphene, conductive carbon black, and the like, that is, one or more nanocarbon materials having high electrical conductivity and usable as a conductive additive for secondary batteries, either alone or in combination. The content of the nanocarbon material used in preparing the second binder solution may vary depending on the type of the nanocarbon material, but may be in a range of 2 to 100 parts by weight per 100 parts by weight of the remaining binder compounds excluding the nanocarbon material (i.e., the first binder compound forming the core layer and the conventional second binder compound forming the shell layer). If the content of the nanocarbon material is less than 2 parts by weight, the amount is too small to provide a sufficient pre-mixing effect, which is disadvantageous. If the content is 100 parts by weight or more, the viscosity of the second binder mixture becomes excessively high, making it difficult to mix with the first binder dispersion, which is also disadvantageous. Here, the content of the nanocarbon material refers to the amount of the nanocarbon material included in the electrode material layer, regardless of whether the nanocarbon material is incorporated during the preparation of the composite binder particles or is additionally introduced during the dry mixing process for preparing the electrode material layer composition after the composite binder particles have been prepared. Accordingly, it is acceptable that a portion of the nanocarbon material is included during the preparation of the composite binder particles and the remainder is added during the dry mixing process to prepare the electrode material layer composition.

In the core-shell structured composite binder particles of the present invention, the contents of the first binder forming the core and the second binder forming the shell are experimentally determined and may be in a weight ratio range of 90-10:10-90. That is, if the content of either component is below the lower limit or exceeds the upper limit of the above range, the amount of one component becomes excessively high or low, so that a core-shell structure cannot be formedor the resulting product cannot be regarded as a true composite.

In addition, the method for preparing the core-shell structured composite binder particles of the present invention includes: a step of dispersing a fluorine-based resin, which is the first binder, in water to prepare a first binder dispersion; a step of dissolving an organic polymer, which is the second binder, in a solvent to prepare a second binder solution; a step of introducing the second binder solution into the first binder dispersion while stirring; and a post-treatment stepof filtering, washing, and drying the product obtained after completion of the stirring.

Here, the step of preparing the first binder dispersion is carried out by preparing an aqueous dispersion of fluorine-based resin particles, and, if necessary, a commercially available dispersionmay also be used.

The step of preparing the second binder solution may be carried out by dissolving the polymeric second binder in a solvent to prepare the second binder solution. Here, the solvent is not particularly limited as long as it is capable of dissolving the second binder; however, in one embodiment, dimethylformamide (DMF), N-methyl-2-pyrrolidone (NMP), or watermay be used.

In particular, the amounts of the first binder dispersed in the first binder dispersion and the second binder dissolved in the second binder solutionmay be adjusted to have a weight ratio of 90-10:10-90. Through such a formulation ratio, it is possible to finally obtain a core-shell structured composite binderin the form of a single particle, in which a fluorine-based resin particle as the first binder constitutes the core and a layer of the polymeric second binder surrounds the outer surface thereof.

The stirring step may be performed by slowly introducing the second binder solution into the first binder dispersion while stirring. The stirring conditions are also experimentally established, and the process may be carried out under vigorous stirring at a speed of 200 to 5,000 rpm, at a temperature of 20 to 70 °C, for 20 minutes to 5 hours. When the conditions are below the lower limits of the above ranges, the core-shell structuring reaction does not sufficiently occur or becomes difficult to proceed, which is disadvantageous; whereas when the conditions exceed the upper limits, the core-shell structuring reaction is likely to be disturbed, which is also disadvantageous.

The post-treatment step is a process for recovering the core-shell structured composite binder particles formed in the stirring step, and may be carried out by filtering the product obtained after completion of stirring to separate the core-shell structured composite binder particles from the solvent, followed by washing for purification and drying. Here, the filtering and washing may be performed one or more times.

In addition, the electrode of the present invention includes an electrode material layer comprising any one of the above-described core-shell structured composite binder particles or the core-shell structured composite binder particles prepared by any one of the above-described preparation methods. The electrode comprising the core-shell structured composite binder particles of the present invention may be obtained by an electrode manufacturing method based on a dry process, as described below. First, an electrode material layer composition is prepared by placing an active material, a conductive additive, and the core-shell structured composite binder particles of the present invention into a container and performing a dry mixing process. Thereafter, the composition is subjected to calendering to prepare an electrode material sheet (or a free-standing film) having a predetermined thickness, and the sheet is then laminated onto a metal current collector to fabricate an electrode. In this process, a primer layer, which is an adhesion-promoting layer, may be formed in advance on the surface of the current collector so that the electrode material sheet can be firmly adhered thereto. Since the electrode manufacturing method based on such a dry process may employ any known method, the present invention is not limited to any specific process or conditions.

Furthermore, the secondary battery of the present invention includes an electrode fabricated with an electrode material layer comprising the core-shell structured composite binder having the configuration described above.

Here, the electrode material layer is prepared from an electrode material layer composition including an active material, a conductive additive, and the core-shell structured composite binder particles. Since the conductive additive may employ a conventionally known composition, it is not particularly limited. The active material may be any one selected from the group consisting ofan alkali metal element, an alkaline earth metal element, manganese, nickel, cobalt, aluminum, iron, phosphorus, tin, titanium, graphite, silicon, silicon oxide, sulfur, and combinations thereof. Here, the alkali metal element may be any one selected from the group consisting oflithium, sodium, potassium, rubidium, cesium, and francium, and the alkaline earth metal element may be any one selected from the group consisting ofberyllium (Be), magnesium (Mg), calcium (Ca), strontium (Sr), barium (Ba), and radium (Ra). When necessary, as described above, the electrode material layer composition may be prepared by further adding a nanocarbon materialto the core-shell composite binder particles, the active material, and the conductive additive, followed by performing a dry mixing process.

As described above, the core-shell structured composite binder particles of the present invention can be applied to all types of active material systems regardless of the type of active material, and are particularly suitable for electrode fabrication by a dry process. For example, the composite binder particles are applicable to electrodes including any active material components used in positive electrode layers and negative electrode layers, such as alkali metal elements, alkaline earth metal elements, manganese, nickel, cobalt, aluminum, iron, sulfur, phosphorus, graphite, titanium, silicon, silicon oxide, and tin.

Accordingly, the secondary battery of the present invention may be various types of secondary batteries, such as secondary batteries using lithium ions or sodium ions, and secondary batteries using liquid or solid electrolytes. In one embodiment, when the secondary battery of the present invention is an all-solid-state battery, it may be a sulfide-based all-solid-state batteryincluding a sulfide-based solid electrolyte.

### Example 1

### 1. Preparation of First Binder Dispersion

A first binder dispersion was prepared using PTFE particles having an average particle diameter of 200 nm (0.2 µm). Specifically, 20 g of a PTFE dispersion having a solid content of 50 wt% (corresponding to 10 g based on solid content) was prepared.

### 2. Preparation of Second Binder Solution

### (1) Synthesis of Acrylonitrile-Acrylic Acid Copolymer

First, acrylonitrile and acrylic acid were weighed at a molar ratio of 80:20 and introduced into DMF such that the solid content became 5 wt%. The mixture was stirred and heated to 90 ° C, followed by mixing for 10 minutes. Thereafter, ammonium persulfate (APS) was slowly added dropwise as a polymerization initiator in an amount of 1.5 wt% based on the solid content, and the reaction was allowed to proceed for 10 hours to obtain a copolymer. As the reaction progressed, the reaction solution gradually turned light brown. After completion of the reaction, the product was filtered and then vacuum-dried at 40 ° C for 24 hours, thereby obtaining a final acrylonitrile-acrylic acid copolymer (AN-AA copolymer).

### (2) Preparation of Second Binder Solution

The obtained acrylonitrile-acrylic acid copolymer was dissolved in DMF to prepare a second binder solution having a solid content of 10 wt%.

### 3. Stirring Step

To 20 g of the first binder dispersion (solid content 50 wt%, corresponding to 10 g on a solid basis), 100 g of the second binder solution (corresponding to 10 g on a solid basis) was slowly added while stirring. The mixture was then stirred at a speed of 1,200 rpm for 1 hour.

### 4. Post-treatment Step

The product obtained from the stirring step was filtered using a pressure filter, followed by washing twice with distilled water. Thereafter, the washed product was dried at 50 °C, thereby obtaining a light-brown final product, namely core-shell structured composite binder particles 1(core:PTFE; shell:AN-AA copolymer).

After drying, the total weightof the product was approximately 18 g, corresponding to a yield of about 90%.

### Example 2

Except that an acrylonitrile-ethylene glycol-maleic acid copolymer (AN-PEG-MA copolymer) synthesized as described below was used in the step of preparing the second binder solution, the same procedure as in Example 1was carried out to obtain core-shell structured composite binder particles 2having an ivory-colored surface(core:PTFE; shell:AN-PEG-MA copolymer). The yield after dryingwas about 90%.

### Synthesis of Acrylonitrile-Ethylene Glycol-Maleic Acid Copolymer

First, maleic acidand ethylene glycol(molecular weight: 4,000 g/mol) were weighed at a molar ratio of 1:2, and introduced into dimethylformamide (DMF)such that the solid content became 5 wt%. The mixture was stirred at 90 °C for 10 minutesto obtain a homogeneous solution. Thereafter, while maintaining the same temperature, p-toluenesulfonic acid (p-CH₃C₆H₄SO₃H)was slowly added as a reaction initiatorin an amount of 1.5 wt% based on the solid content, and the mixture was allowed to react for at least 6 hours. After completion of the above reaction, acrylonitrilewas added to the reaction mixture, and while stirring, ammonium persulfatewas slowly added dropwise, followed by reaction for 10 hoursto synthesize a three-component copolymer. At this time, the weight ratioof the total amount of maleic acid and ethylene glycolused in the first reaction to acrylonitrilewas adjusted to 1:1, and the amount of ammonium persulfatewas set to 1.5 wt% based on the total solid content. After completion of all reactions, the reaction product was pressure-filtered, and the obtained solid was vacuum-dried at 40 °C for 24 hours, thereby obtaining the final acrylonitrile-ethylene glycol-maleic acid copolymer.

### Example 3

Except that a lithium-added acrylonitrile-acrylic acid copolymer synthesized as described below was used in the step of preparing the second binder solution, the same procedure as in Example 1 was carried out to obtain core-shell structured composite binder particles 3 having a light-brown surface color.

The acrylonitrile-acrylic acid copolymer synthesized in Example 1 was introduced into a water/ethanol mixed solvent (weight ratio: 85:15) at a copolymer concentration of 40 wt%. Thereafter, p-toluenesulfonic acid was slowly added to the solution to achieve a concentration of 15 wt% in the solution, and the mixture was subjected to hydrogenation while stirring at 70 °C for about 6 hours. Subsequently, the reaction product was filtered, and the obtained solid was dissolved again in a water/ethanol mixed solvent (weight ratio: 85:15) at a concentration of 10 wt%. To this solution, lithium hydroxide was added to reach a concentration of 10 wt% in the solution, and the mixture was stirred at 70 °C for about 4 hours to induce a lithium adding reaction. After completion of the reaction, the product was subjected to filtering and washing using a water/ethanol mixed solvent, thereby obtaining the final lithium-added copolymer.

### Example 4

Except that a lithium-added acrylonitrile-ethylene glycol-maleic acid copolymersynthesized as described below was used in the step of preparing the second binder solution, the same procedure as in Example 1was carried out to obtain core-shell structured composite binder particles 4 having an ivory-colored surface.

The lithium-added acrylonitrile-ethylene glycol-maleic acid copolymerwas synthesized in the same manner as described in Example 3, except that the acrylonitrile-ethylene glycol-maleic acid copolymer synthesized in Example 2 was used as the starting copolymer.

### Example 5

Except that a second binder solutionwas prepared by adding multi-walled carbon nanotubes(MWCNTs) to the acrylonitrile-ethylene glycol-maleic acid copolymer (AN-PEG-MA copolymer) of Example 2 in an amount of 10 parts by weight, based on the total weight of the first binder (fluorine-based resin)and the second binder (AN-PEG-MA copolymer), the same procedure as in Example 2was carried out to obtain black-colored core-shell structured composite binder particles 5.

### Example 6

Except that, in the step of preparing the second binder solution, PVDF, which is commonly used as a cathode binder for lithium-ion batteries, was dissolved in NMP to prepare a second binder solution having a solid content of 10 wt%, the same procedure as in Example 1was carried out to obtain light-brown core-shell structured composite binder particles 6(core:PTFE; shell:PVDF). After drying, the total weightof the product was approximately 18 g, corresponding to a yield of about 80%.

### Example 7

Except that a second binder solutionwas prepared by adding multi-walled carbon nanotubes(MWCNTs) to the acrylonitrile-ethylene glycol-maleic acid copolymer (AN-PEG-MA copolymer)of Example 2 in an amount of 5 parts by weight, based on the total weight of the first binder (fluorine-based resin)and the second binder (AN-PEG-MA copolymer), the same procedure as in Example 2was carried out to obtain core-shell structured composite binder particles 7(core:PTFE; shell:AN-PEG-MA copolymer; CNT-containing, black-colored).

### Example 8

Using the core-shell structured composite binder particles 1 obtained in Example 1, Cathode 1 was prepared as follows.

NCM811(94.5 wt%), conductive carbon black(2 wt%), and core-shell structured composite binder particles 1(3.5 wt%) were weighed and introduced into a high-speed mixer, followed by mixing for 10 minutesto obtain a cathode material layer composition. Thereafter, an electrode material sheet was formed by a calendering process, and the sheet was laminated onto an aluminum current collector under a pressure of approximately 8 kgf/cm². Subsequently, the laminated structure was subjected to roll pressing to fabricate Cathode 1 having a thickness of approximately 75 µm. At this time, a primer layer having a thickness of about 1 µm had been formed in advance on the surface of the aluminum current collector.

### Example 9

Cathode 2 was prepared in the same manner as in Example 8, except that the core-shell structured composite binder particles 2 obtained in Example 2 were used and the thickness of the cathode was adjusted to approximately 85 µm.

### Example 10

Cathode 3 was prepared in the same manner as in Example 8, except that the core-shell structured composite binder particles 3 obtained in Example 3 were used.

### Example 11

Cathode 4 was prepared in the same manner as in Example 8, except that the core-shell structured composite binder particles 4 obtained in Example 4 were used.

### Example 12

Using the core-shell structured composite binder particles 2 obtained in Example 2 and the core-shell structured composite binder particles 5 obtained in Example 5, Cathode 5 was prepared as follows.

NCM811(94.5 wt%), core-shell structured composite binder particles 5 of Example 5(3.5 wt%), core-shell structured composite binder particles 2 of Example 2(0.5 wt%), and conductive carbon black(1.5 wt%) were weighed and introduced into a high-speed mixer, followed by mixing for 10 minutesto obtain a cathode material layer composition. Thereafter, an electrode material sheet was formed by a calendering process, and the sheet was laminated onto an aluminum current collector under a pressure of approximately 8 kgf/cm². Subsequently, the laminated structure was subjected to roll pressing to fabricate a cathode having a thickness of approximately 75 µm. At this time, a primer layer having a thickness of about 1 µmhad been formed in advance on the surface of the aluminum current collector.

### Example 13

Cathode 6 was prepared in the same manner as in Example 8, except that the core-shell structured composite binder particles 6 obtained in Example 6 were used and the thickness of the cathode was adjusted to approximately 85 µm.

### Example 14

Using the core-shell structured composite binder particles 2 obtained in Example 2 and the core-shell structured composite binder particles 7 obtained in Example 7, Cathode 7 was prepared as follows.

NCM811(94.8 wt%), core-shell structured composite binder particles 7(3.5 wt%), core-shell structured composite binder particles 2(0.2 wt%), and conductive carbon black(1.5 wt%) were weighed and introduced into a high-speed mixer, followed by mixing for 10 minutesto obtain a cathode material layer composition. Thereafter, an electrode material sheet was formed by a calendering process, and the sheet was laminated onto an aluminum current collector under a pressure of approximately 8 kgf/cm². Subsequently, the laminated structure was subjected to roll pressing to fabricate Cathode 7 having a thickness of approximately 80 µm. At this time, a primer layer having a thickness of about 1 µm had been formed in advance on the surface of the aluminum current collector.

### Example 15

### 1. Preparation of Core-Shell Structured Composite Binder Particles

Core-shell structured composite binder particles 2 (core:PTFE; shell:AN-PEG-MA copolymer) were prepared in the same manner as in Example 2.

### 2. Preparation of Cathode

NCM811(95.3 wt%), core-shell structured composite binder particles 2(3.5 wt%), multi-walled carbon nanotubes (MWCNTs) (0.2 wt%), and conductive carbon black(1.0 wt%) were weighed and introduced into a high-speed mixer, followed by mixing for 10 minutesto obtain a cathode material layer composition. Thereafter, an electrode material sheet was formed by a calendering process, and the sheet was laminated onto an aluminum current collectorunder a pressure of approximately 8 kgf/cm². Subsequently, the laminated structure was subjected to roll pressingto fabricate Cathode 8 having a thickness of approximately 80 µm. At this time, a primer layer having a thickness of about 1µm had been formed in advance on the surface of the aluminum current collector.

### Example 16

### 1. Preparation of Core-Shell Structured Composite Binder Particles

Core-shell structured composite binder particles 6 were prepared in the same manner as in Example 6.

### 2. Preparation of Cathode for an All-Solid-State Battery

A cathode material layer composition for an all-solid-state battery was prepared using NCM811 (70 wt%), Li₆PS₅Cl, which is a sulfide-based solid electrolyte(24 wt%), conductive carbon black(2.5 wt%), and core-shell structured composite binder particles 6(3.5 wt%). First, the active material and the sulfide-based solid electrolyte were mixed in a mortarfor about 30 minutes. Thereafter, conductive carbon black and the binder were added, followed by a second mixing step for about 30 minutesto obtain the cathode material layer composition for a sulfide-based all-solid-state battery. Subsequently, the mixture was uniformly spread on a primer-treated aluminum current collector, and then compressed using a small press to fabricate Cathode 9 having a thickness of approximately 80 µm. All of the above processes were carried out inside a glove box filled with argon gas in order to prevent moisture ingress.

### Example 17

Cathode 10 was prepared in the same manner as in Example 16, except that a composition comprising NCM811(70 wt%), Li₆PS₅Cl (25 wt%), single-walled carbon nanotubes (SWCNTs) (1.5 wt%), and core-shell structured composite binder particles 6(3.5 wt%) was used.

### Comparative Example

A comparative cathode was prepared in the same manner as in Example 1, except that polytetrafluoroethylene (PTFE) used as the first binder was used instead of the core-shell structured composite binder particles.

### Example 18

A half-cell type coin cell (CR2032), designated as Coin Cell 1, was fabricated using Cathode 1 obtained in Example 8. In this case, lithium metal foil was used as a counter electrode, and an electrolyte solution was prepared by dissolving 1.15 M LiPF₆ in a mixed carbonate-based solvent composed of ethylene carbonate (EC), diethyl carbonate (DEC), vinylene carbonate (VC), and fluoroethylene carbonate(FEC) at a weight ratio of EC/DEC/VC/FEC = 3/7/0.05/0.05. The coin cell was assembled inside a glove box filled with argon gas.

### Examples 19 to 25

Coin Cells 2 to 8 were fabricated in the same manner as in Example 18, except that Cathodes 2 to 8 obtained in Examples 9 to 15, respectively, were used instead of Cathode 1.

### Example 26

An experimental cell 1was fabricated using Cathode 9, which is a sulfide-based all-solid-state battery cathode obtained in Example 16. In this case, a lithium-indium alloy anode was used as a counter electrode (lithium: Honjo Co.; indium: Nilaco Co.), and a solid electrolyte layer comprising 100 mg of Li₆PS₅Cl was used as a separator. The stacking sequence was arranged as follows: electrode / solid electrolyte / indium / lithium alloy (anode). All processes for fabricating Experimental Cell 1 were carried out inside a glove box filled with argon gasin order to prevent moisture ingress.

### Example 27

Experimental Cell 2 was fabricated in the same manner as in Example 26, except that Cathode 10, which is a sulfide-based all-solid-state battery cathode obtained in Example 17, was used.

### Experimental Example 1

The following copolymers synthesized in Examples 1 to 4 were evaluated by visual inspection and Fourier-transform infrared spectroscopy (FTIR) : acrylonitrile- acrylic acid copolymer, acrylonitrile-ethylene glycol-maleic acid copolymer, lithium-added acrylonitrile-acrylic acid copolymer, and lithium-added acrylonitrile-ethylene glycol- maleic acid copolymer.

As a result of visual inspection, the acrylonitrile-acrylic acid copolymer exhibited a light brown color regardless of whether lithium was added. Likewise, the acrylonitrile-ethylene glycol-maleic acid copolymer exhibited an ivory color, also irrespective of lithium addition.

FTIR analysis revealed that, regardless of lithium addition, the acrylonitrile-acrylic acid copolymer showed characteristic absorption peaks corresponding to the carboxyl group of acrylic acid and the cyano group(-CN) of acrylonitrile, thereby confirming that a binary copolymer had been successfully synthesized. Similarly, the acrylonitrile-ethylene glycol-maleic acid copolymer exhibited characteristic peaks attributable to maleic acid carbonyl groups, ethylene glycol, and acrylonitrile, confirming the formation of a ternary copolymer.

The presence of lithium was verified by trace element analysis using inductively coupled plasma-optical emission spectroscopy (ICP-OES). In addition, it was confirmed that the lithium-added copolymers were soluble in water, further demonstrating that lithium had been successfully incorporated into the copolymers.

### Experimental Example 2

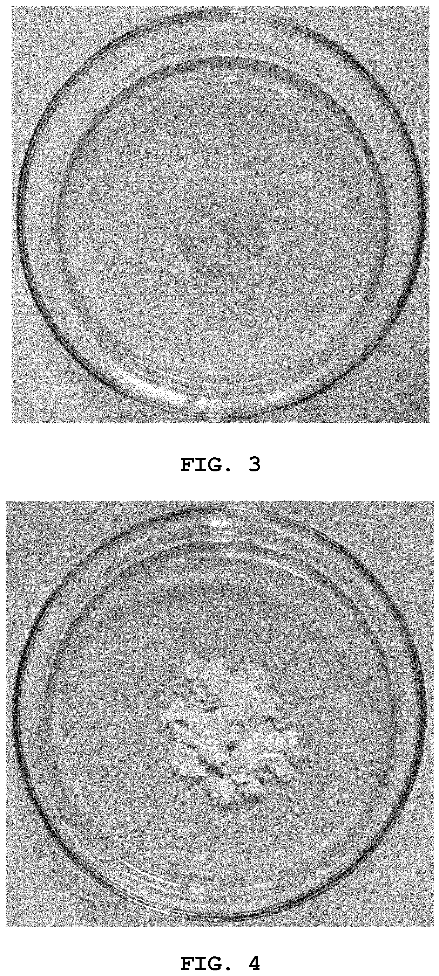

The core-shell structured composite binder particles 1 and 2, prepared in Examples 1 and 2, respectively, were visually observed, and the results are shown in FIGS. 3 and 4. FIG. 1 schematically illustrates a cross-sectional structureof the core-shell structured composite binder particles of the present invention.

Meanwhile, fluorine-based resin particles are not dissolved in water but are dispersed therein. Accordingly, the first binder dispersion formed by dispersing the fluorine-based resin particles appears white, as shown in FIG. 2, indicating that the fluorine-based resin particles themselves are white in color.

As can be seen from FIG. 3, the core-shell structured composite binder particles 1 exhibit a light brown color, and no white color attributable to the fluorine-based resin particles is observed. This indicates that white fluorine-based resin particles form the core, and the outer surface is entirely covered with a shell formed of a binary copolymer, thereby confirming the formation of the intended core-shell structured composite binder particles.

Likewise, as shown in FIG. 4, the core-shell structured composite binder particles 2 exhibit an ivory color, and no white color of the fluorine-based resin particles is observed. This demonstrates that white fluorine-based resin particles constitute the core, while the outer surface is coated with a shell formed of a ternary copolymer, confirming the successful formation of the core-shell structured composite binder particles.

Although not illustrated, when PVDFis used as the shell material, PVDF becomes transparent upon dissolution in the solvent (NMP). Accordingly, the core-shell structured composite binder particles 6 prepared therefrom exhibited a white appearance.

### Experimental Example 3

To evaluate the degree of adhesion between the electrode layer and the metal plate, positive electrodes 1 and 2 prepared in Examples 8 and 9, positive electrodes 6 to 8 prepared in Examples 13 to 15, and the comparative positive electrode prepared in the Comparative Example were subjected to adhesion and cohesion tests using an adhesive tape (3M Scotch Tape). The adhesion strength was evaluated based on the degree to which the electrode layer was peeled from the metal plate. When the electrode layer was not completely detached from the metal plate, the adhesion was judged to be satisfactory. The cohesion strength, representing the internal binding force between electrode components was evaluated by comprehensively considering the resistance felt when removing the tapeand the extent to which the electrode material adhered to the tape during peeling. In addition, to evaluate flexibility, each positive electrode plate was wound around a rod having a diameter of 10 mm, and it was examined whether the electrode layer was cracked or damaged. The electrical conductivity of each electrode or material was evaluated by measuring the surface resistance using a four-point probe method(instrument: Mitsubishi; electrodes: planar electrodes). The surface resistance was expressed in units of Q/square(for example, 400 Q/square is expressed as 4.0 × 10² Ω/square).

As a result of the adhesion tests, positive electrodes 1 and 2 and positive electrodes 6 to 8 did not peel from the metal plate, indicating that they exhibited excellent adhesion. In addition, resistance was felt when the tape was removed, and only a small amount of electrode material was transferred to the tape, demonstrating that these electrodes also exhibited good cohesion of the electrode layer. In contrast, although the comparative positive electrode showed relatively acceptable adhesion to the metal plate, almost no resistance was felt when the tape was removed, and a large amount of the electrode layer was detached and transferred to the tape. Accordingly, the comparative positive electrode was determined to have very poor cohesion of the electrode layer. As a result of the flexibility test, all electrodes, including the comparative positive electrode, exhibited sufficient flexibility and were bent without cracking. As a result of the surface resistance measurement, both the inventive positive electrodes and the comparative positive electrode exhibited surface resistance values in the range of 10² to 10³ Q/square, and similar values were obtained at four different measurement points. This indicates that high-quality positive electrodeshaving uniform electrical properties were successfully prepared.

Based on the results of Experimental Example 3, charge-discharge cycle tests were conducted on coin cells fabricated using the positive electrodes excluding the comparative positive electrode. Since the comparative positive electrode was determined to have very poor cohesion of the electrode layer, it was not subjected to the charge-discharge cycle test.

### Experimental Example 4

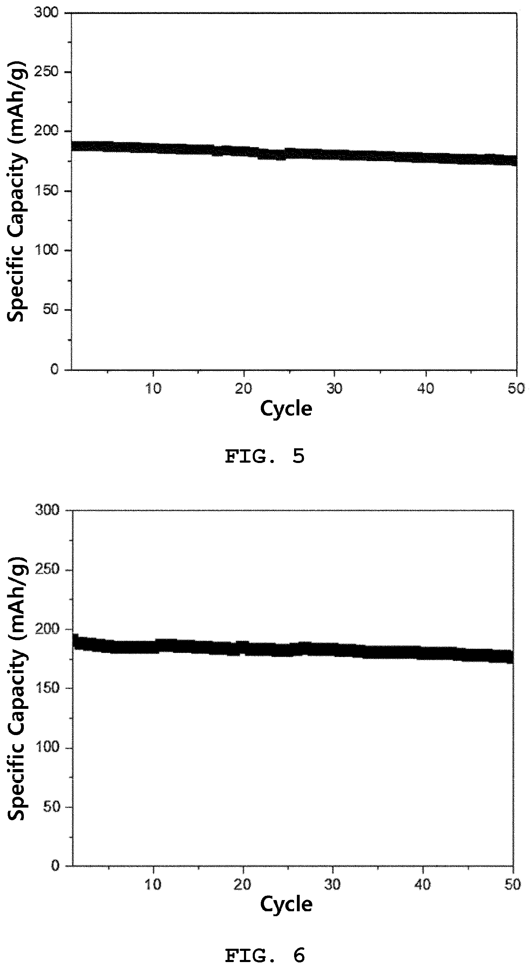

A charge-discharge cycling test was performed on Coin Cell 1 prepared in Example 18 at a rate of 1.0 C, and the results are shown in Figure 5.

The charge-discharge cycling test was conducted by first carrying out a formation process in which the C-rate was gradually increased from 0.1 C to 1.0 C, followed by a cycle-life test at a constant rate of 1.0 C. During the cycling test, the discharge capacity measured after the fourth cycle was defined as the initial capacity. The capacity retention was then calculated by comparing this initial capacity with the discharge capacity after 50 cycles.

As a result of the charge-discharge cycling test, as illustrated in Figure 5, the initial discharge capacity was 188 mAh g⁻¹, and the discharge capacity after 50 cycles was 175 mAh g⁻¹, corresponding to a capacity retention of approximately 93%, thereby confirming excellent electrochemical performance.

### Experimental Example 5

A charge-discharge cycling test was performed on Coin Cell 2 prepared in Example 19 in the same manner as in Experimental Example 4, and the results are shown in Figure 6.

As a result of the cycling test, the initial discharge capacity was 190 mAh g⁻¹, and the discharge capacity after 50 cycles was 176 mAh g⁻¹, indicating a capacity retention of approximately 93%.

### Experimental Example 6

Charge-discharge cycling tests were performed on Coin Cells 3 and 4 prepared in Examples 20 and 21, respectively, in the same manner as described in Experimental Example 4.

As a result of the cycling tests, Coin Cell 3 exhibited an initial discharge capacity of 192 mAh g⁻¹ and a discharge capacity of 176 mAh g⁻¹ after 50 cycles, corresponding to a capacity retention of approximately 92%. For Coin Cell 4, the initial discharge capacity and the discharge capacity after 50 cycles were 194 mAh g⁻¹ and 183 mAh g⁻¹, respectively, indicating a capacity retention of approximately 94%.

### Experimental Example 7

A charge-discharge cycling test was performed on Coin Cell 5 prepared in Example 22 using the same procedure as in Experimental Example 4.

As a result, Coin Cell 5 exhibited an initial discharge capacity of 188 mAh g⁻¹ and a discharge capacity of 176 mAh g⁻¹ after 50 cycles, corresponding to a capacity retention of approximately 94%.

### Experimental Example 8

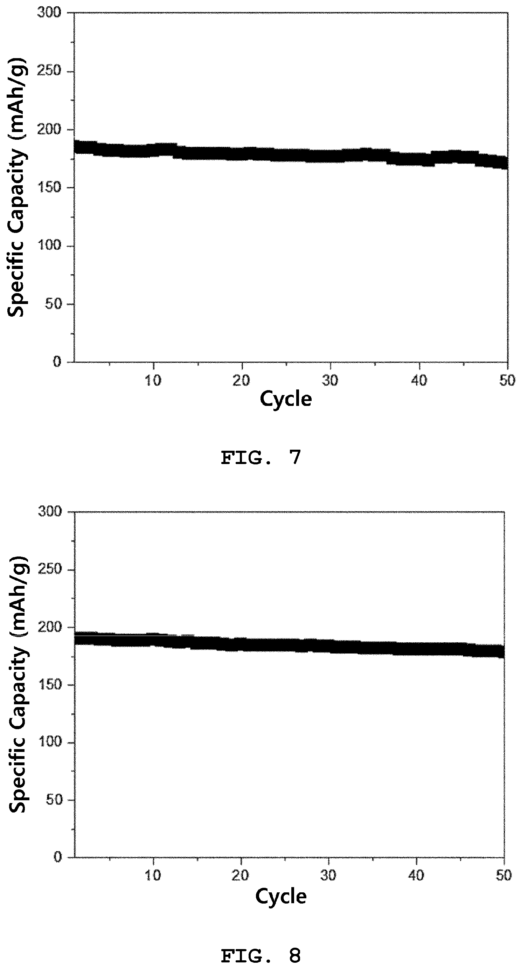

A charge-discharge cycling test was conducted on Coin Cell 6 prepared in Example 23 at a rate of 1.0 C, and the results are shown in Figure 7.

The cycling test was carried out by first performing a formation process in which the C-rate was gradually increased from 0.1 C to 1.0 C, followed by a cycle-life test at a constant rate of 1.0 C. During the cycling test, the discharge capacity measured after the fourth cycle was defined as the initial capacity, and the capacity retention was calculated by comparing this value with the discharge capacity after 50 cycles.

As shown in Figure 7, the initial discharge capacity was 185 mAh g⁻¹, and the discharge capacity after 50 cycles was 171 mAh g⁻¹, corresponding to a capacity retention of approximately 92%.

### Experimental Example 9

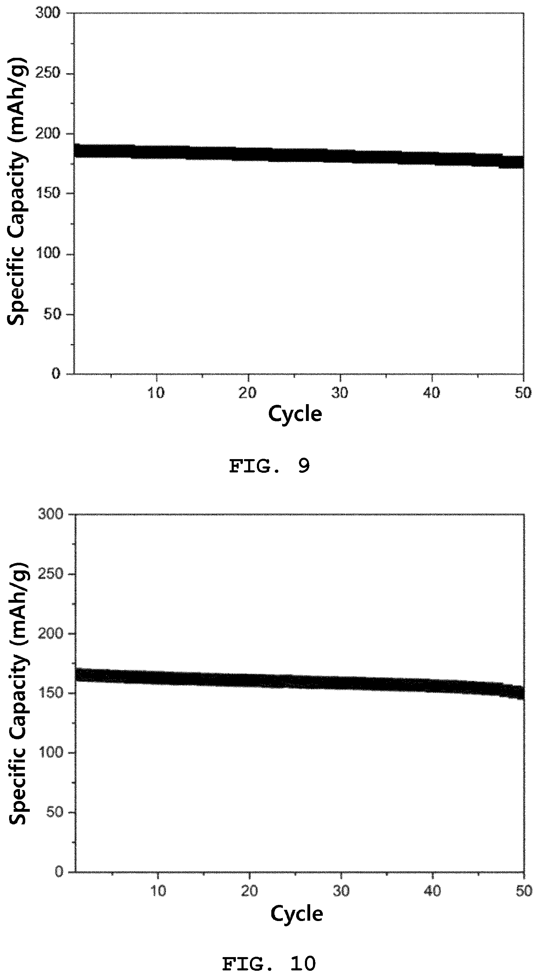

Charge-discharge cycling tests were performed on Coin Cells 7 and 8 prepared in Examples 24 and 25, respectively, in the same manner as described in Experimental Example 4. The results are shown in Figures 8 and 9, respectively.

As shown in Figure 8, Coin Cell 7 exhibited an initial discharge capacity of 190 mAh g⁻¹ and a discharge capacity of 178 mAh g⁻¹ after 50 cycles, corresponding to a capacity retention of approximately 94%. Meanwhile, as shown in Figure 9, Coin Cell 8 exhibited an initial discharge capacity of 186 mAh g⁻¹ and a discharge capacity of 176 mAh g⁻¹ after 50 cycles, indicating a capacity retention of approximately 95%.

From the results of Experimental Example 9, in which the first binder and the second binder constituting the core-shell structured composite binder particles included in the electrode material layer were identical materials, it can be confirmed that the incorporation of carbon nanotubes (CNTs)in either the composite binder particles or the electrode material layer composition tends to improve capacity retention. Furthermore, with respect to the method of incorporating carbon nanotubes, comparable capacity retention was observed whether the carbon nanotubes were incorporated during the preparation of the composite binder particles to form CNT-containing composite binder particles, or alternatively, were added and mixed during the dry-mixing process using composite binder particles prepared without carbon nanotubes.

### Experimental Example 10

A charge-discharge cycling test was performed on Experimental Cell 1(a sulfide-based all-solid-state battery) prepared in Example 26, and the results are shown in Figure 10. The cycling protocol was identical to that used in Experimental Example 4, except that a formation process was carried out at a rate of 0.1-0.33 C, followed by a cycle-life test at 0.33 C.

As shown in Figure 10, the initial discharge capacity of the sulfide-based all-solid-state battery was 165 mAh g⁻¹, and the discharge capacity after 50 cycles was 150 mAh g⁻¹, corresponding to a capacity retention of approximately 91%.

### Experimental Example 11

A charge-discharge cycling test was performed on Experimental Cell 2(a sulfide-based all-solid-state battery) prepared in Example 27 in the same manner as in Experimental Example 10.

Although not shown in the figures, the initial discharge capacity of the sulfide-based all-solid-state battery of Example 27 was 167 mAh g⁻¹, and the discharge capacity after 50 cycles was 155 mAh g⁻¹, resulting in a capacity retention of approximately 93%.

From the results of Experimental Examples 10 and 11, it can be confirmed that carbon nanotubes function as a more effective conductive additive even in sulfide-based all-solid-state batteries.

From the foregoing experimental results, it is evident that, according to the present invention, a core-shell structured composite binder particle can be prepared by using a conventional electrode binder compound of either a homopolymer type or a copolymer type as a second binder, and fluorine-based resin particles as a first binder, such that a core-shell structureis formed in which the interior core is composed of fluorine-based resin particles and the outer surface is covered with a shell layer formed of the second binder. Furthermore, when the composite binder particles of the present invention are used as a binder for a dry electrode fabrication process, it is possible to manufacture positive electrodes exhibiting excellent adhesion and low surface resistance, and to fabricate secondary batteries exhibiting favorable electrochemical performance, such as high capacity retention. In addition, the technology of the present invention is applicable not only as a binder for lithium-ion batteriesbut also as a binder for all-solid-state batteries.
Although the present invention has been mainly described with reference to positive electrodes, it will be readily apparent that the technology of the present invention is equally applicable to the fabrication of negative electrodes.

Although the present invention has been illustrated and described with the preferred embodiments as discussed hereinabove, the present invention is not limited to the aforementioned embodiments, and various changes and modifications can be made by those skilled in the art to which the present invention pertains, without departing from the spirit of the present disclosure.

## Claims

1. A core-shell structured composite binder particle comprising:
a core formed of a first binder that is a fluorine-based resin; and
a shell formed of a second binder that entirely surrounds the surface of the core.

2. The composite binder particle according to claim 1, wherein the fluorine-based resin comprises at least one selected from the group consisting of a fluorine-containing homopolymer, a fluorine-containing copolymer, and combinations thereof.

3. The composite binder particle according to claim 1, wherein the first binder comprises polytetrafluoroethylene (PTFE), and the second binder comprises at least one organic compound used as an electrode binder for a secondary battery.

4. The composite binder particle according to claim 1, wherein the second binder comprises at least one selected from:
a ternary copolymer or a binary copolymer including two or more functional groups selected from acrylonitrile groups, glycol groups, and carboxyl groups; or
polyvinylidene fluoride or a copolymer containing vinylidene fluoride.

5. The composite binder particle according to claim 4, wherein the ternary or binary copolymer is an acrylonitrile-based copolymer.

6. The composite binder particle according to claim 5, wherein the ternary copolymer is an acrylonitrile-ethylene glycol-maleic acid copolymer, and the binary copolymer is an acrylonitrile-acrylic acid copolymer.

7. The composite binder particle according to claim 4, wherein, in the ternary or binary copolymer, any one component is present in an amount of 5 mol% to 95 mol%.

8. The composite binder particle according to claim 1, wherein the second binder comprises at least one lithium-added ternary or binary copolymer that includes two or more functional groups selected from acrylonitrile groups, glycol groups, and carboxyl groups, and in which lithium is pre-introduced.

9. The composite binder particle according to claim 4, wherein the second binder further comprises, in addition to the ternary or binary copolymer, other binder compound for a secondary-battery electrode.

10. The composite binder particle according to claim 9, wherein the other binder compound for a secondary-battery electrode is at least one selected from the group consisting of polyvinylidene fluoride (PVDF), carboxymethyl cellulose (CMC), styrene-butadiene rubber (SBR), polyacrylic acid (PAA), lithium-added polyacrylic acid, maleic-acid-based binders, lithium-added maleic-acid-based binders, and combinations thereof.

11. The composite binder particle according to claim 9, wherein the copolymer and the other binder compound are included at a weight ratio of 90-10:10-90.

12. The composite binder particle according to claim 4, wherein the second binder further comprises a nanocarbon material.

13. The composite binder particle according to claim 12, wherein the nanocarbon material is at least one selected from the group consisting of carbon nanotubes(single-walled, double-walled, multi-walled, or branched), carbon nanoribbons, carbon nanoplates, graphene, and conductive carbon black.

14. The composite binder particle according to claim 13, wherein the nanocarbon material is included in an amount of 2 to 100 parts by weight per 100 parts by weight of the remaining binder compounds, excluding the nanocarbon material.

15. The composite binder particle according to claim 1, wherein the diameter of the core formed of the first binder is 0.05 to 5.0 micrometers.

16. The composite binder particle according to any one of claims 1 to 15, wherein the first binder and the second binder are included at a weight ratio of 90-10:10-90.

17. A method for preparing a core-shell structured composite binder particle, comprising:
dispersing a first binder, which is a fluorine-based resin, in water to prepare a first-binder dispersion;
dissolving a second binder, which is a polymer, in a solvent to prepare a second-binder solution;
adding the second-binder solution to the first-binder dispersion while stirring; and
performing a post-treatment step including filtering, washing, and drying a resultant product obtained after completion of the stirring.

18. The method according to claim 17, wherein the amounts of the first binder dispersed in the first-binder dispersion and the second binder dissolved in the second-binder solution are adjusted to provide a weight ratio of 90-10:10-90.

19. The method for preparing a core-shell structured composite binder particle according to claim 17, wherein the stirring step is performed at a rotational speed of 200 to 5,000 rpm, at a temperature of 20 to 70°C, for a duration of 20 minutes to 5 hours.

20. An electrode comprising:
an electrode material layer including (i) the core-shell structured composite binder particle according to any one of claims 1 to 15, or (ii) the core-shell structured composite binder particle prepared by the method according to any one of claims 17 to 19.

21. The electrode according to claim 20, wherein the electrode material layer further comprises a nanocarbon material.

22. The electrode according to claim 21, wherein the electrode includes at least one of:
a configuration in which the nanocarbon material is at least one selected from the group consisting of carbon nanotubes(single-walled, double-walled, multi-walled, or branched), carbon nanoribbons, carbon nanoplates, graphene, and conductive carbon black; and
a configuration in which the nanocarbon material is included in an amount of 2 to 100 parts by weight per 100 parts by weight of the remaining binder composition, excluding the nanocarbon material, in the electrode material layer.

23. A secondary battery comprising the electrode according to claim 20.

24. The secondary battery according to claim 23, wherein the active material of the electrode is at least one selected from the group consisting of alkali metal elements, alkaline earth metal elements, manganese, nickel, cobalt, aluminum, iron, phosphorus, tin, titanium, graphite, silicon, silicon oxide, sulfur, and combinations thereof.

25. The secondary battery according to claim 23, wherein the secondary battery is an all-solid-state battery comprising a sulfide-based solid electrolyte.
